# EUROPEAN PATENT APPLICATION

(11) **EP 1 592 077 A1**
(43) Date of publication of application: **02.11.2005**
(21) Application number: 03782885.2
(22) Date of filing: 24.12.2003
(51) Int. Cl.: H01M 2/06, H01M 2/30, H01M 4/02, H01M 4/60, H01M 10/40

(54) **STORAGE BATTERY**

(30) Priority: 25.12.2002 JP 2002375453
(71) Applicant: FUJI JUKOGYO KABUSHIKI KAISHA, Tokyo-To (JP)
(72) Inventor: ANDO, Nobuo, Hofu-shi, Yamaguchi 747-0823 (JP); TASAKI, Shinichi, Hofu-shi, Yamaguchi 747-0823 (JP); YAMAGUCHI, Masaki, Yao-shi, Osaka 581-0075 (JP); HATO, Yukinori, Hofu-shi, Yamaguchi 747-0823 (JP)
(74) Representative: Vossius & Partner
(86) International application number: PCT/JP2003/016645
(87) International publication number: WO 2004/059760

(57) **Abstract**

In a film-type battery, it is possible to increase energy density, however, it is difficult to obtain a high performance characteristic. Contrary to the above, a film-type storage device and an electric device including the film-type storage device having a storage body, which has a pair of positive and negative electrodes, and is sealed with a surface film, at least a part of which is sealed; and connecting terminals for connecting the positive and negative electrodes to the outside, a part of each of which is exposed, in which the exposed portions of the connecting terminals are located at non-sealed portions, can solve the above problem.

## Description

### Technical Field

The present invention relates to a film battery, a surface of which is covered with a film, and particularly, to a film-type storage device which has superior airtightness and can be designed compact.

### Background Art

In recent years, a secondary battery using conductive polymer, transition metal oxide or the like for a positive electrode, and lithium metal or lithium-alloy for a negative electrode is proposed as a battery replacing Ni-Cd battery and lead battery, since the above secondary battery has high energy density.

However, there is a problem in that, if the secondary battery is discharged and recharged repeatedly, the positive or negative electrode of the above secondary battery deteriorates, whereby the capacity of the secondary battery decreases substantially. Specially, there is a safety problem in that, since the deterioration of the negative electrode accompanies the formation of branch-shaped lithium crystal, so-called dendrite, if the secondary battery is discharged and recharged repeatedly, the dendrite penetrates a separator, the battery is short-circuited, and the battery may be broken.

Therefore, in order to solve the above problems, a battery using a carbon material such as graphite and the like for the negative electrode, and lithium-included metal oxide such as LiCoO₂ and the like for the positive electrode is proposed. In the above battery, lithium is supplied to the negative electrode from the lithium-included metal oxide of the positive electrode when the battery, which has been assembled previously, is charged, and the lithium in the negative electrode goes back to the positive electrode when the battery discharges. That is, the above battery is a so-called rocking-chair battery. Since the above battery does not use metal lithium for the negative electrode, and only lithium ions take part in the charging and discharging of the battery, the battery is called a lithium ion secondary battery, and distinguished from a lithium battery, which uses metal lithium. The battery is characterized by high voltage, high capacity, and high safety.

As described above, since the lithium ion secondary battery has high capacity, the battery has been researched for an effective power source and used for a main power source of a notebook computer or mobile phone. Specially, in the field of a mobile phone, since the thickness and weight of a mobile phone is substantially reduced, it is required to reduce the thickness and weight of the lithium ion secondary battery used as a main power source of a mobile phone. As a result, in recent years, the surface case of a rectangular battery is made of aluminum, instead of steel, to reduce the weight of the battery. In addition, the thickness of the battery must be as thin as 3 to 4 mm, whereby a film battery, which uses aluminum laminated films as surface material, is widely used.

In addition, as the importance of environmental protection grows, a storage system of reusable energy generated by solar or wind power generation, a dispersed storage and generation system for the load leveling of the electric power, or a power source (main power source and auxiliary power source) for an electric vehicle, which will replace a gasoline vehicle, is under active development. So far, a lead battery has been used as a power source for on-vehicle electronic facilities. However, as the performance and function of on-vehicle devices or facilities such as power window, car stereo and the like improve, a new power source is demanded from viewpoints of energy density and performance density. Even in the field of large-scale batteries, a laminated film battery, which is aimed at the weight and size reduction, as well as a conventional cylindrical or rectangular battery is under development. The laminate film battery can be installed in a limited space such as load conditioner, which is installed in a house, vehicle and the like, therefore the laminate film battery is effective in reducing space needed for the battery installation, and thus the battery is under examination for practical use.

Generally, a three-layer laminate film, which includes adhesive layers such as a nylon film at the outermost, an aluminum foil in the middle, and a modified polypropylene at the innermost, is used as a surface material for the film battery. Generally, the laminate film is drawn deeply in accordance with the size and depth of the electrode and the like, which is located in the middle, and the laminate film has a structure, in which a unit including layered or wound positive electrode, negative electrode and separator, is installed, an electrolytic solution is injected, and then two laminate films are sealed by thermal-bonding and the like.

At this time, a positive electrode terminal (made of mainly several tens to several hundreds µm-thick aluminum foil) and a negative electrode terminal (made of mainly several tens to several hundreds µm-thick nickel foil) project from a gap between the laminate films to the outside of the battery, and the laminate films are sealed by thermal-bonding with the positive and negative electrode terminals interposed therebetween. It is also devised to use thin metal foils for terminals, as described above, to etch the surfaces of the terminals, or to adhere sealant films previously in order to seal the films satisfactorily.

In addition, although a single cell can form the battery, it is more common to form a battery with a plurality of cells. In this case, the film batteries are layered, the terminals projecting outward are tied, and the terminals are electrically communicated with one another.

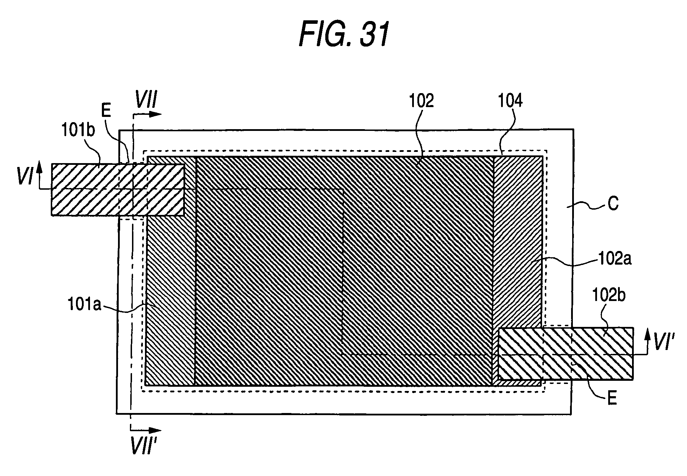

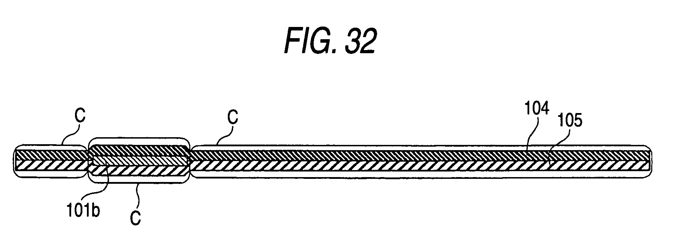

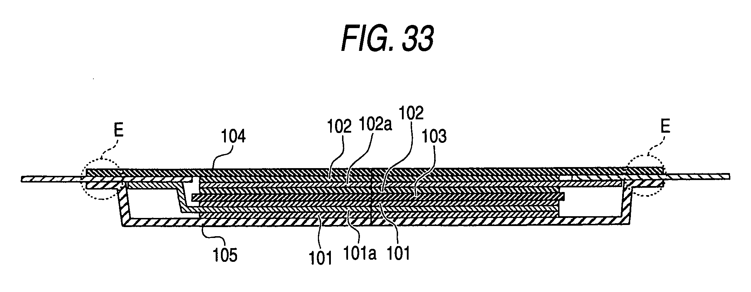

Specific examples of conventional film batteries are shown in Figs. 31 to 33. In the conventional film batteries, a positive electrode collector 101a is welded to a positive electrode tab 101b, and a negative electrode collector 102a is welded to a negative electrode tab 102b. The positive and negative electrode tabs 101b and 102b project outward from a gap between two surface films so as to form positive and negative electrodes. Figs. 31 to 33 show general structures of the conventional film batteries. The positive tab 101b welded to the positive electrode collector 101a and the negative tab 102b welded to the negative electrode collector 102a project outward directly from a gap between two laminate films as external terminals.

In the film battery or capacitor described above, the terminals, which are interposed between two surface films, induce thickness difference, whereby it is difficult to seal the films. The lithium ion secondary batteries or film batteries of electrical double-layer capacitors, which have been already commercialized, also still have sealing problems.

In addition, there is another problem in that the terminals (burr of the terminals) are easily short-circuited from the aluminum foil, which is an intermediate layer of the laminate film, when the films are sealed by thermal-bonding, since etching of the terminals causes burr due to slits.

On the other hand, in the field of large-scale batteries such as electric vehicle power source, power source, which stores energy generated by solar and wind power generation, or load conditioner, high energy density and high performance characteristic is demanded, as described above, whereby cylindrical or rectangular battery is researched and partially used. However, in the case of the film battery, although the energy density can be increased, it is difficult to obtain high performance characteristic, since the resistance of the terminals, which are made of thin metal foils for sealing described as above, themselves contributes to the deterioration of the performance of the battery.

In addition, since the terminals project outward, the volume occupied by the terminals increases, whereby extra space is required to install the battery in a vehicle and the like. As a result, the energy density of the battery deteriorates.

It is an object of the present invention to provide a film-type storage device, which has low frequency of electrolytic solution leakage and low internal resistance. It is another object of the invention to provide a film-type storage device, which can be designed compact. It is still another object of the invention to provide a storage device, which has high energy density when the batteries are combined for use by prominently decreasing the energy density loss due to the terminals.

In addition, it is a further object of the invention to provide an organic electrolyte battery or capacitor having a superior charging and discharging characteristic. It is a still further object of the invention to provide a storage device, which can be charged and discharged for a long time, and has superior safety. It is a still further object of the invention to provide a storage device, which is easy to manufacture.

General electrode active materials may be used for the above-mentioned storage devices, and also an insoluble and infusible base having polyacene-based skeletal structure, which is described in Japanese Examined Patent Application Publication Nos. 1-44212 and 3-24024, also can be used.

### Disclosure of the Invention

The present inventors could get an idea of projecting terminals to non-sealed portions in a cell main body instead of to the outside of the cell main body from sealed portions of surface films during researches for achieving the above objects, and have improved the idea so as to complete the present invention. That is, the invention is as follows.
[1] A film-type storage device including a storage body having at least a pair of positive and negative electrodes, and connecting terminals for connecting the positive and negative electrodes to the outside, in which part of the connecting terminals are exposed, and the storage body is sealed with a surface film, at least part of which is sealed, is characterized in that the exposed parts of the connecting terminals are located at non-sealed portions.
[2] The film-type storage device according to [1], in which the exposed portions of the connecting terminals are formed in the terminals.
[3] The film-type storage device according to [2], in which the internal exposed portions of the connecting terminals are blind bores.
[4] The film-type storage device according to [2], in which the internal exposed portions of the connecting terminals are penetrating holes.
[5] The film-type storage device according to [1], in which the connecting terminals of the positive and negative electrodes are fixed to a same terminal supporting body, and the terminal supporting body is integrally fixed to an inner surface of the surface film.
[6] The film-type storage device according to any one of [1] to [5], in which a positive electrode material can carry lithium ions and/or anions reversibly, a negative electrode material can carry lithium ions reversibly, the negative active material has capacitance per unit weight over three times larger than that of the positive active material, the weight of the positive active material is larger than that of the negative active material, and a lithium electrode carrying lithium previously at the negative electrode is provided at the storage body.
[7] The film-type transmitting device according to [6], in which the storage body includes positive and negative electrode collectors, the collectors have holes penetrating the front and rear surfaces of the collector respectively, the lithium electrode, which electrochemically supplies lithium to the negative electrode, is further provided opposite to the negative electrode.
[8] The film-type storage device according to [6] or [7], in which the negative active material is an insoluble and infusible base having a polyacene-based skeletal structure, in which the hydrogen/carbon atomic ratio is in the range of 0.50 to 0.05.
[9] An electric device having the storage device of anyone of [1] to [8]

The film-type storage device according to an aspect of the invention is a storage device, which is covered with a film. Storage devices are devices capable of storing electric energy and at least one of the storage devices is a device capable of discharging. That is, the storage device includes a capacitor as well as primary and secondary batteries. The film-type storage device according to an aspect of the invention includes a storage body having at least a pair of positive and negative electrodes, and connecting terminals for connecting the positive and negative electrodes to the outside, part of the connecting terminals are exposed, the storage body is sealed by a surface film, at least part of which is sealed, and the exposed portions of the terminals are located in non-sealed portions.

That is, contrary to a conventional film battery, in which the connecting terminals project from a gap of two surface films to the outside, and the surface films are sealed with the connecting terminals therebetween, the film-type storage device according to an aspect of the invention has nothing between two overlapped films. In an aspect of the invention, the exposed portions of the connecting terminals, through which electricity flows, are located in portions different from portions sealed (that is, sealed portions) in order to seal the storage body with the surface film. Therefore, the storage body can be sealed easily with the surface film, and thus the storage device has high airtightness. Also, there is extremely low possibility that the connecting terminals are short-circuited from aluminum used in the surface films.

Since at least part of surface film is sealed, inclusions such as the storage body and the like are sealed. In examples described in the following examples and drawings, two films compose the surface film, and the inclusions are covered with the films, which are overlapped, and then thermally bonded at the outer circumference thereof. Although sheet-shaped films are used and four sides thereof are thermally bonded in the examples, the shape of the surface film is not limited thereto. Any other shaped film members than sheet-shaped film members disclosed in the examples, for example, cylindrical or pouched film member may be used. When the cylindrical film member is used, two sides of the film member facing each other are thermally bonded to seal the inclusion. Also, when pouched film member is used, an opening side is thermally bonded to seal the inclusions.

The structure that exposed portions of the connecting terminals for connecting the positive and negative electrodes to the outside are placed in non-sealed portion will be described in detail with a case of the positive electrode. The exposed portions of the connecting terminals have the following structure. Holes are formed at the corners of the surface film surfaces to take out the connecting terminals, aluminum plates as half thick as the battery are fixed to the inside of the battery to cover the holes by thermal bonding and the like, the positive electrode collector is directly welded to the metal surface by ultrasonic welding, or the positive lead terminals are welded to the positive electrode collector, and then the aluminum plate, which is the connecting terminal, is welded to the positive lead terminal by ultrasonic welding and the like. Also, a lead wire can be fixed to the surface of the aluminum plate, which projects outward from the hole formed at the corner of the surface film surface, with a screw, which does not penetrate the plate.

In the above structure, if the sealing portions of the aluminum plate and the surface films have sufficient areas, complete sealing can be easily performed. In addition, in the conventional structure, since thin metal foils project from the inside of the battery as connecting terminals, the distance from the electrode collector in the battery to the terminals, to which lead wires are attached, increases, and the resistance of the terminals are increased. However, in the case of the invention, since the electrode collectors are directly welded to the aluminum plate, the distance from the electrode collector in the battery to the lead wires is equal to only the thickness of the aluminum plate, whereby the resistance becomes extremely low.

It is preferable that the connecting terminals have the exposed portions therein. More specifically, it is preferable that the inner exposed portions of the connecting terminals form the inner surfaces of the blind bores or the penetrating holes. In addition, it is also preferable that each connecting terminal of the positive and negative electrodes is fixed to a terminal supporting body, and the terminal supporting body be integrally fixed to the inner surface of the surface film. The strength of the terminal can be improved by using the terminal supporting body. Meanwhile, the sizes of the positive and negative terminals are not limited. It is preferable that the terminal be as small as possible on condition that sufficient airtightness can be obtained within a limited volume in order to obtain sufficient capacity, on the other hand, it is preferable that the terminal be as large as possible in order to decrease the contacting resistance (welding resistance) of the collector. Therefore, the size of the terminal should be selected properly according to the characteristic of a designed cell.

Further, in the storage device according to an aspect of the invention, since the terminals do not project from the facing portions of the surface films, the storage device can be designed compact. In addition, in the case of an assembled battery, which is an embodiment of the storage device according to an aspect of the invention, since the batteries can be connected with each other just via a lead wire, which connects the connecting terminals, the storage device has no terminal projecting outward. Thus the storage device can be a compact assembled battery. Further, since the connecting terminals have penetrating holes penetrating the front and rear surfaces of the cell, the assembled battery can be easily connected by inserting copper-made rods into the penetrating holes of a plurality of layered batteries. Accordingly, and the assembled battery can be designed compact. In this case, the layering method of the batteries varies with the arrangement of batteries, that is, whether the batteries are arranged parallel or serially. Meanwhile, in the present specification, a storage body sealed with the surface films is called a 'cell'.

As described above, in an aspect of the invention, since the increase in resistance and the decrease in energy density due to the connecting terminals can be suppressed, the invention can be applied to a storage device demanding high performance and high capacity. Specifically, the invention is appropriately applied to a lithium ion storage device and the like having characteristics such as high performance and high energy density.

'The positive electrode' is an electrode, from which electric current flows in discharging, and 'the negative electrode' is an electrode, into which electric current flows in discharging. Though, the positive and negative active materials used in the storage device according to an aspect of the invention are not limited, electrode materials, which are generally used for batteries or capacitors, can be used as the active materials. It is preferable that, for example, a substance, which can carry lithium ions and/or anions reversibly, be used as the positive active material, a substance, which can carry lithium ions reversibly, be used as the negative active material, the capacitance per unit weight of the negative active material be three times larger than that of the positive active material, the weight of the positive active material be larger than that of the negative active material, and a lithium electrode, which make the negative electrode carry lithium before charging, be provided. When the storage device takes the above form, a storage device having a high-voltage, high-capacity can be obtained. Meanwhile, in the specification, an embodiment of the invention structured as above is called a first embodiment of a lithium ion storage device.

Generally, a capacitor uses the same active material (mainly active carbon) for the positive and negative electrodes in almost the same amount. The active material used for the positive and negative electrodes has a potential of about 3 V in cell-assembling. When the storage device is charged, anions form electric double layers on the positive electrode surface so as to increase the positive electrode potential, on the other hand, cations form electric double layers on the negative electrode surface so as to decrease the negative electrode potential. Contrary to the above, when the storage device discharges, anions from the positive electrode and cations from the negative electrode flow into the electrolytic solution, and then the potentials increase or decrease respectively, therefore, the potential approaches back to 3 V. That is, the shapes of the charging and discharging curves of the positive and negative electrodes are almost symmetric linearly, the potential change of the positive electrode is almost equal to that of the negative electrode. In addition, only anions and cations flow in and out from the positive and negative electrodes, respectively.

On the other hand, a storage device including a first example of the lithium ion storage device uses an active material, which can reversibly carry lithium ions and/or anions in the positive electrode, and an active carbon, which is used for the positive and negative electrodes of a conventional electric double layer capacitor, can be used as the above active material. Also, an aprotic organic solvent solution of a lithium salt is used in the electrolyte part, and the negative electrode has over three times larger capacitance than the capacitance per unit weight of the positive active material. The weight of the positive active material is larger than that of the negative active material, a lithium electrode carrying lithium previously in the negative electrode before charging is provided at the storage body, whereby lithium can be carried previously in the negative electrode before charging. The storage device according to an aspect of the invention can have high capacity with the following three mechanisms.

First, since the weight of the negative active material can be decreased with no change in the negative electrode potential by using a negative electrode having larger capacitance per unit weight than that of the positive electrode, the filling amount of the positive active material increase, and thus the capacitance and capacity of the cell increase. In addition, in another design, the large capacitance of the negative electrode decreases the amount of potential change of the negative electrode, as a result, the amount of potential change of the positive electrode increases, whereby the capacitance and capacity of the cell increases.

Second, while the positive electrode potential is about 3 V, the negative electrode potential is lowered below 3 V by carrying a predetermined amount of lithium in the negative electrode in order to obtain a required capacity as the negative electrode capacity when cells are assembled.

In the example, 'lithium is previously carried in the negative electrode before charging' means that lithium is previously carried in the negative electrode before the storage device is charged, whereby it does not include lithium supplied by charging and discharging. The carrying method of lithium in the negative electrode will be described later.

When the cell voltage is increased until the electrolytic solution is decomposed by oxidation, the voltage is determined almost by the positive electrode potential. Comparing with a storage device having a common cell structure, the storage device according to an aspect of the invention, in which lithium is previously carried, has higher withstand voltage because of the low negative electrode potential. That is, while common capacitors are used at voltages in the range of 2.3 to 2.7 V, the storage device according to an aspect of the invention can be used at over 3 V, whereby the energy density can be improved.

Third, the low potential of the negative electrode increases the capacity of the positive electrode, and can further increase the amount of potential change when the positive electrode discharges. In some designs, the positive electrode potential can decrease down to below 3 V at the end of the discharge, for example, the discharge voltage can be lowered to 2 V (down to 3 V, anions are discharged, and, below 3 V, lithium ions are carried, whereby the potential decreases).

Although the positive electrode potential can decrease to 3 V when a conventional electric double layer capacitor discharges, an aspect of the invention can lower the negative electrode potential to 3 V at the above time. It is because the cell potential becomes 0 V. That is, the above example of the invention, which can lower the positive electrode potential to 2 V, have higher capacity than that of the conventional electric double layer capacitor, which can lower the positive electrode potential to 3 V.

Hereinafter, capacitance and capacity in the present specification will be defined as follows. The cell capacity represents the amount of electricity flowing into the cell (the gradient of the discharging curve) per unit cell voltage, and uses F (farad) as unit. The capacitance per unit weight of the cell is represented as the ratio of the cell capacity to the total weight of the positive and negative active materials filled up in the cell (unit is F/g). In addition, the capacitances of the positive and negative electrodes represent the amount of electricity flowing into the cell (the gradient of the discharging curve) per unit voltage of the positive or negative electrode, and use F (farad) as unit. The capacitances per unit weight of the positive and negative electrodes represent the ratio of the capacitances of the positive and negative electrodes to the weight of the positive and negative active materials, and use F/g as unit.

Further, the cell capacity is the difference between the discharge beginning and finishing voltages of the cell, that is, the cell capacity multiplied by the voltage amount, and uses C (coulomb) as unit. In the present specification, 1 C is the amount of electric charge when 1 A of current flows for a second, and converted into mAh. The positive electrode capacity is the capacitance of the positive electrode multiplied by the difference between the discharge beginning and finishing potentials of the positive electrode (the amount of potential change of the positive electrode), and uses C or mAh as unit. The negative electrode capacity is the capacitance of the negative electrode multiplied by the difference between the discharge beginning and finishing potentials of the negative electrode (the amount of potential change of the negative electrode), and uses C or mAh as unit. The cell capacity, positive electrode capacity, and negative electrode capacity have the same values.

In the storage device of an aspect of the invention, a means, which previously carries lithium in the negative electrode, is not limited. For example, in addition to the lithium ion storage device, a member capable of supplying lithium such as metal lithium and the like can be assembled into the lithium ion storage device after a predetermined amount of lithium is carried in the negative electrode. In this case, the negative electrode and the lithium electrode may be connected (short-circuited) physically, or carried electrochemically.

In addition, as an industrially convenient method, lithium can be supplied by metal lithium disposed in the cell supplies lithium to the negative electrode.

Generally, in order to obtain high performance characteristic of the storage device, the positive and negative electrodes are wound or layered with a separator interposed therebetween. A multi-layered storage device has positive and negative electrode collectors, which are electron flowing media in the positive and negative electrodes. In the invention, the positive and negative electrode collectors are not limited, however, it is preferable that the positive and negative electrode collectors have multi-layered structures, a storage body provided with the lithium electrode have the positive and negative electrodes, each collector have a hole penetrating the front and rear surfaces thereof, and the lithium electrode be disposed opposite to the negative electrode to supply lithium electrochemically to the negative electrode (referred to as a second example). In this case, it is preferable that a material having a hole penetrating the front and rear surfaces, for example, expanded metal, be used as the positive and negative electrode collectors, lithium be disposed opposite to the positive or negative electrode, and at part of the storage body such as the outermost circumference, in which the electrodes are wound or layered, since the above structure can be manufactured easily, and can carry lithium in the negative electrode smoothly. Lithium may be stuck throughout the negative electrode. However, when the electrodes are made to obtain high performance characteristic, the stuck lithium becomes thin.

As described above, in a preferred example of the invention, a member having a hole penetrating the front and rear surfaces thereof is preferable, whereby, for example, expanded metal, punching metal, net, foam and the like can be used. The shape, number and the like of the penetrating holes are not limited, and can be set to flow lithium ions in the electrolytic solution, which will be described later, between the front and rear surfaces of the electrodes without flowing into the electrode collectors.

The porosity of the electrode collector can be obtained by multiplying {1 - (collector weight / collector true specific gravity) / (collector apparent volume)} with 100. When the porosity is high, the negative electrode can carry lithium for a short time, and fluctuation seldom occur. However, it is difficult to hold an active material at the opening, and the yield of the electrode preparation decreases since the strength of the electrode is low. Further, an opening portion, especially active materials on the opening easily falls off, and causes internal short-circuit of the battery.

On the other hand, when the porosity is low, it takes time to carry lithium in the negative electrode, however, the strength of the electrode increases, and the active material seldom falls off. Therefore, the electrode yield increases. It is preferable to select the porosity or pore diameter of the collector properly in consideration of the battery structure (multi-layered type, winding type or the like) or productivity.

In addition, various materials generally proposed for an organic electrolyte battery can be used for an electrode collector, whereby aluminum, stainless and the like can be used for the positive electrode collector, and stainless, copper, nickel and the like can be used for the negative collector.

In a storage device according to a second example of the invention, lithium carried by electrochemical contact with the lithium disposed in the cell means a substance, which carries lithium, and can supply lithium ions such as lithium metal or lithium-aluminum alloy.

In addition, as another preferred example of the invention, a storage device includes a storage body having three or more layers, which are formed with wound or layered sheet-shaped positive and negative electrodes and the like. The storage body has a cell-structure with large electrode surface per unit volume of the capacitor, whereby a high voltage capacitor generating high performance can be obtained, not like a coin-shaped battery.

Any substance, which can carry lithium ions and anions such as tetrafluoroborate reversibly, can be used as the positive active material of the invention, and for example, an active carbon, a conductive polymer, a polyacenic substance and the like are preferable substances. Further, among the above substances, it is preferable to use an insoluble and infusible base having a polyacene-based skeletal structure, the hydrogen/carbon atomic ratio of which is in the range of 0.5 to 0.05 (hereinafter referred to as 'PAS'), since high capacity can be obtained. The PAS can be obtained by thermal-treating, for example, an aromatic condensation polymer, which will be described later.

In addition, any substance, which can carry lithium reversibly, can be used as the negative active material of the invention, and various carbonic materials such as graphite, hard carbon, cokes and the like, polyacenic-series substances, silver oxide, silicon oxide and the like are preferable substances. Among the above substances, it is preferable to use the PAS, since high capacity can be obtained. The present inventors obtained the capacitance of over 650 F/g when the storage device discharges after 400 mAh/g of lithium is carried (charged) in the PAS, and the capacitance of over 750 F/g, when the storage device discharges after 500 or more mAh/g of lithium is charged.

It is evident that the PAS has an extremely large capacitance since the capacitance per unit weight of the positive and negative electrodes of the common electric double layer capacitor is in the range of 60 to 200 F/g. It is preferable to control the charging amount of lithium in the negative electrode in consideration of the capacitance of the used positive electrode, since it is possible to obtain the capacitance three times larger than the capacitance per unit weight of the positive electrode, and an assembly, in which the weight of the positive active material is larger than that of the negative active material, can obtain better effect.

When the capacitance per unit weight of the negative electrode is not as three times large as that of the positive electrode, the capacity increase is smaller than that of the conventional electric double layer capacitor, in which almost the same amount of same active material is used for the positive and negative electrode, whereby the conventional electric double layer capacitor having a simple cell structure is thought to be better.

In addition, even when the capacitance per unit weight of the negative electrode is three times or more large than that of the positive electrode, if the weight of the positive active material is smaller than that of the positive active material, the capacity increase is smaller than that of the conventional electric double layer capacitor.

In a preferred example of the invention, if an active material having an amorphous structure, the voltage of which smoothly decreases as lithium such as the PAS is inserted, and the voltage of which increases as lithium is desorbed, is used, since the potential decreases much enough to increase the amount of carried lithium, the obtained withstand voltage (storage voltage) of the storage device increases, and the increasing speed (the gradient of the discharging curve) of the voltage in discharging decrease, whereby the capacity increases slightly. Therefore, it is preferable to set the lithium amount properly within the occlusion extent of the lithium in accordance with the required using voltage of the storage device.

In addition, since the PAS has an amorphous structure, there is no structural change such as expansion · contraction against the insertion · desorption of lithium ion. Therefore the PAS has superior cycle characteristic, and since the PAS has an isotropic molecular structure (hyper-structure) against the insertion · desorption of lithium ion, the PAS has a superior characteristic in urgent charging and discharging, the PAS is suitable for a negative electrode material.

The aromatic condensation polymer, which is a precursor of the PAS, is a condensed substance of aromatic hydrocarbon compound and aldehyde-series. Phenol-series such as phenol, cresol, xylenol and the like can be used preferably as the aromatic hydrocarbon compound. For example, methylenethe · bisphenol-series represented by the following equation, or hydroxyl · diphenol-series, hydroxyl naphthalene-series can be used as the aromatic hydrocarbon compound. Among the above, practically, phenol-series, specially, phenol is the most preferable. 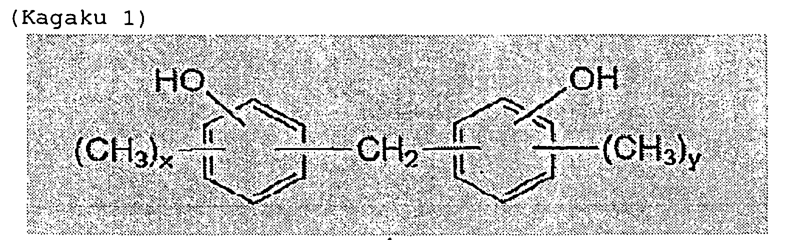 (Herein, x and y are independent from each other and one of 0, 1 or 2)

Further, a modified aromatic polymer, which is an aromatic hydrocarbon compound having the above phenolichydroxyl substituted with an aromatic hydrocarbon compound having no phenolichydroxyl such as xylene, toluene, aniline and the like, for example, a condensed substance of phenol, xylene, and formaldehyde can be used as the above aromatic condensation polymer. In addition, a modified aromatic polymer substituted with melanin or urea can be used, and a flan resin is also preferable.

Aldehyde such as formaldehyde, acetaldehyde, furfural and the like can be used as aldehyde, and among the above, formaldehyde is preferable. In addition, one of novolac-type, resol-type or a mixture of both may be used as phenolformaldehyde.

The above insoluble and infusible base can be obtained by treating the above aromatic polymer thermally, and any insoluble and infusible base having the above polyacene-based skeletal structure can be used.

The insoluble and infusible base used for the invention can be manufactured as follows. That is, the insoluble and infusible base having the hydrogen/carbon atomic ratio (hereinafter written as H/C) in the range of 0.5 to 0.05, preferably 0.35 to 0.10 can be obtained by heating the above aromatic condensation polymer slowly up to a proper temperature in the range of 400 to 800°C under the non-oxidation atmosphere (vacuum atmosphere included).

In addition, the insoluble and infusible base having a specific surface area can be obtained with the BET method of 600 m²/g or more, which is disclosed in Japanese Examined Patent Application Publication No. 3-24024. For example, a solution including an initial condensate of the aromatic condensation polymer and an inorganic salt such as zinc chloride is prepared and heated, and then the solution is hardened in the mold.

The insoluble and infusible base having the above H/C and the specific surface area obtained by the BET method, for example, of 600 m²/g or more can be obtained by heating the hardened body obtained as above up to a proper temperature in the range of 350 to 800°C, preferably 400 to 750°C under the non-oxidation atmosphere (vacuum atmosphere included), and then cooling the body sufficiently with water or dilute hydrochloric acid.

According to an X-ray diffraction (CuKα), the insoluble and infusible base used for the invention shows the main peak at 2θ, below 24°, and broad peaks in the range of 41 to 46°. That is, the above insoluble and infusible base seems to include a polyacene-based skeletal structure, in which an aromatic polycyclic structure is properly developed, and take an amorphous structure, and lithium can be doped safely, whereby the insoluble and infusible base is useful for an active material of a lithium ion storage device.

It is preferable that the positive and negative electrodes in the invention be obtained by shaping the positive and negative active materials having shapes easy to form such as powder, granule, filament and the like with binder. Rubber-series binder such as SBR and the like or fluorine-included resins such as polytetrafluorinated ethylene, polyfluorinated vinylidene and the like, and thermoplastic resins such as polypropylene, polyethylene and the like can be used as the binder, and among the above, it is preferable to use the fluorine-series binder. Especially, it is preferable to use the fluorine-series binder having the fluorine/carbon atomic ratio (hereinafter referred to as F/C) in the range of 0.75 to 1.5, more preferably, 0.75 to 1.3.

As for the fluorine-based binder, examples include polyfluorovinylidene, copolymers of fluorovinylidene-trifluoroethylene, copolymers of ethylene-tetrafluoroethylene, copolymers of propylene-tetrafluoroethylene and the like, and further those fluorine-based polymers having the hydrogen in the main chain substituted by an alkyl group can be also used.

In the case of the aforementioned polyfluoronivylidene, the ratio of F/C is 1, and in the case of the copolymers of fluorovinylidene-trifluoroethylene, when the mole fractions of fluorovinylidene are 50% and 80% the ratios of F/C are 1.25 and 1.1, respectively. Furthermore, in the case of the copolymers of propylene-tetrafluoroethylene, when the mole fraction of propylene is 50%, the ratio of F/C is 0.75. Among these, polyfluorovinylidene, and the copolymers of fluorovinylidene-trifluoroethylene with the mole fraction of fluorovinylidene being 50% or greater are preferred, and in practice, polyfluorovinylidene is preferably used.

In addition, conductive materials such as acetylene black, graphite, metal powder or the like may be appropriately added to the above-mentioned active substances for the anode or cathode, if necessary. Although the mixing ratio for the conductive materials may vary depending on the electroconductivity of the active substance, shape of electrodes or the like, the materials are suitably added in a proportion of 2 to 40% relative to the active substance.

In the capacitor of the invention, the electrolyte part consists of an electrolyte and a medium which allows dissolution of the electrolyte. More specifically, it consists of an electrolytic solution in which an electrolyte is dissolved in a solvent, and the like. For the preferred solvent constituting the electrolytic solution, for example, an aprotic organic solvent may be employed. Examples of this aprotic organic solvent include ethylene carbonate, propylene carbonate, dimethyl carbonate, diethyl carbonate, γ-butyrolactone, acetonitrile, dimethoxyethane, tetrahydrofuran, dioxolane, methylene chloride, sulfolane and the like. Further, it is also possible to use mixtures of two or more of these aprotic organic solvents.

Furthermore, as for the electrolyte to be dissolved in one or mixtures of the above-mentioned solvents, any of those electrolytes which generate lithium ions can be used. Examples of such electrolyte include LiI, LiClO₄, LiAsF₆, LiBF₄, LiPF₆ and the like.

The above electrolyte and solvent is dehydrated sufficiently, and then mixed with each other so as to be the electrolyte. It is preferable that the concentration of the electrolyte in the electrolyte be at least 0.1 mol/l or more, more preferably in the range of 0.5 to 1.5 mol/l in order to decrease the internal resistance arising from the electrolyte.

### Brief Description of the Drawings

Fig. 1 is a bottom surface view showing a first example of the shape and disposal of positive and negative terminals in a cell according to the present invention seen through a lower surface film.
Fig. 2 is a cross-sectional view taken along the line I - I' in Fig. 1.
Fig. 3 is a cross-sectional view taken along the line II - II' in Fig. 1.
Fig. 4 is a cross-sectional view taken along the line III - III' in Fig. 1.
Fig. 5 is a cross-sectional view taken along the line IV - IV' in Fig. 1.
Fig. 6 is a bottom surface view showing a second example of the shape and disposal of the positive and negative terminals in the cell according to the invention seen through the lower surface film.
Fig. 7 is a cross-sectional view taken along the line II
- II' in Fig. 6.
Fig. 8 is a perspective view of a third example of the shape of the positive and negative terminals in the cell according to the invention seen from the below.
Fig. 9 is a bottom surface view showing the third example of the shape of the positive and negative terminals in the cell according to the invention seen through the lower surface film.
Fig. 10 is a cross-sectional view taken along the line V - V' in Fig. 9.
Fig. 11 is a cross-sectional view taken along the line IV - IV' in Fig. 9.
Fig. 12 is a view showing a fourth example of the shape of the positive and negative terminals, which are supported by terminal supporting bodies, in the cell according to the invention.
Fig. 13 is a view showing another example, in which the positive and negative terminals are supported by the terminal supporting bodies.
Fig. 14 is a bottom surface view of the fourth example of the invention, in which the positive and negative terminals, which are supported by the terminal supporting bodies shown in Fig. 12, are provided, seen through the lower surface film.
Fig. 15 is a cross-sectional view taken along the line II - II' in Fig. 14.
Fig. 16 is a bottom surface view showing an example, in which lithium electrode and the like are provided, seen through the lower surface film.
Fig. 17 is a cross-sectional view taken along the line IV - IV' in Fig. 16.
Fig. 18 is a view showing a first example of the arrangement of layered electrodes in the cell.
Fig. 19 is a view showing a second example of the arrangement of the layered electrodes in the cell.
Fig. 20 is a view showing a third example of the arrangement of the layered electrodes in the cell.
Fig. 21 is a bottom surface view of a first example, in which the electrodes and the like in the cell according to the invention are wound, seen through the lower surface film.
Fig. 22 is a cross-sectional view taken along the line I - I' in Fig. 21.
Fig. 23 is a cross-sectional view taken along the line IV - IV' in Fig. 21.
Fig. 24 is a bottom surface view of a second example, in which the electrodes and the like in the cell according to the invention are wound, seen through the lower surface film.
Fig. 25 is a cross-sectional view taken along the line I - I' in Fig. 24.
Fig. 26 is a cross-sectional view taken along the line IV - IV' in Fig. 24.
Fig. 27 is a spread perspective view showing a first example of the shape and layer direction of terminal welding portion of electrode collector for layering in the cell.
Fig. 28 is a spread perspective view showing a second example of the shape and layer direction of the terminal welding portion of the electrode collector for layering in the cell.
Fig. 29 is a view showing an example of assembled film batteries according to the invention.
Fig. 30 is a view showing an example of assembled film batteries having conventional outside connecting terminals.
Fig. 31 is a view explaining the shape and arrangement of the positive and negative terminals in a conventional film battery.
Fig. 32 is a cross-sectional view taken along the line VII - VII' in Fig. 31.
Fig. 33 is a cross-sectional view taken along the line VI - VI' in Fig. 31.

Hereinafter, each reference numeral shown in each drawing will be described. The reference numeral 1 is a positive electrode, the reference numeral 2 is a negative electrode, the reference numeral 1a is a collector (positive electrode), the reference numeral 2a is a collector (negative electrode), the reference numeral 1b is a positive terminal, the reference numeral 2b is a negative terminal, the reference numeral 1c is a screw portion for lead wire fixing (positive electrode), the reference numeral 2c is a screw portion for lead wire fixing (negative electrode), the reference numeral 3 is a separator, the reference numeral 4 is a surface laminate film, the reference numeral 5 is a surface laminate film (deeply drawn), the reference numeral 6 is a terminal supporting body, the reference numeral 7 is a lithium electrode, the reference numeral 7a is a lithium electrode collector, the reference numeral 7b is a lithium electrode lead terminal (pulling portion), the reference numeral 8 is a conductive wire, the reference numeral 8a is a conductive wire, the reference numeral 9 is an electrode winding unit, the reference numeral 10 is a layered unit of film cells of the invention, the reference numeral 11 is a layered unit of common film cells, the reference numeral 12 is a conductive rod, the reference numeral 101 is a positive electrode, the reference numeral 102 is a negative electrode, the reference numeral 101a is a positive electrode collector, the reference numeral 102a is a negative electrode collector, the reference numeral 101b is a positive tab, the reference numeral 102b is a negative tab, the reference numeral 103 is a separator, the reference numeral 104 is a surface laminate film, the reference numeral 105 is a surface laminate film (deeply drawn), the reference numeral 110 is a cell, and the reference numeral 111 is an assembled battery.

In addition, the letter A represents a thermally bonded portion between the positive terminal and the surface film, the letter B represents a thermally bonded portion between the negative terminal and the surface film, the letter C represents a thermally bonded portion of the surface film, the letter A' represents a welded portion between a terminal welded portion and the positive terminal of the positive electrode collector, the letter B' represents a welded portion between a terminal welded portion and the negative terminal of the negative electrode collector, and the letter E is a thermally bonded portion between the positive or negative terminal and the surface laminate film.

### Best Mode for Carrying Out the Invention

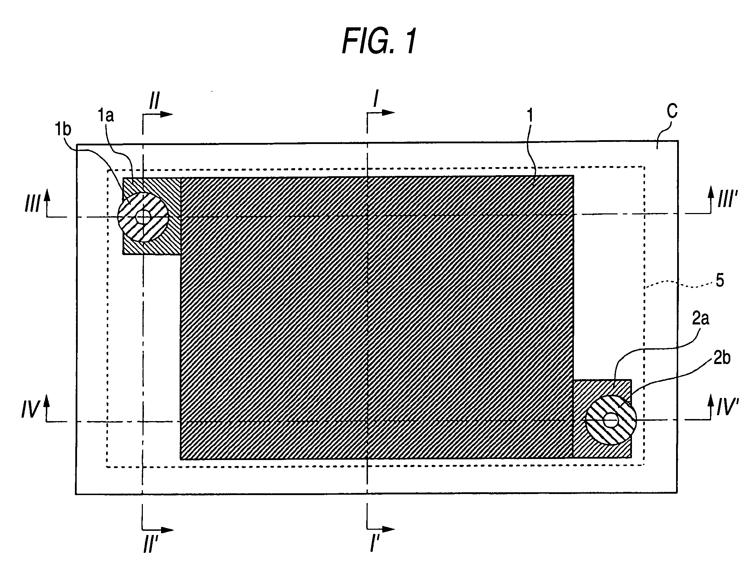

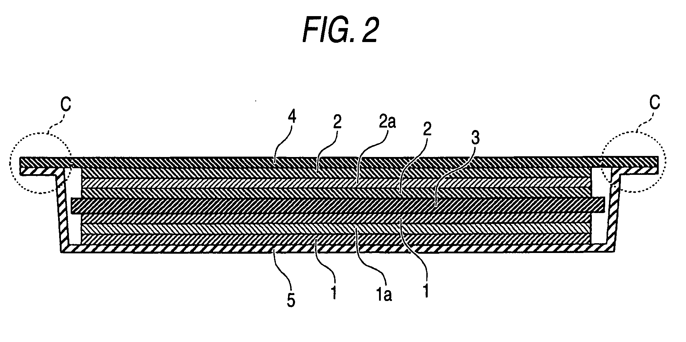

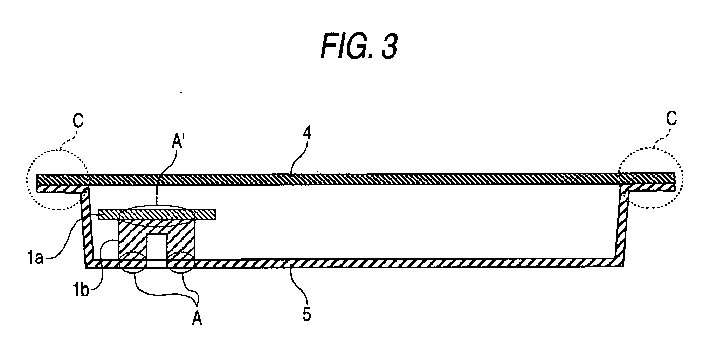

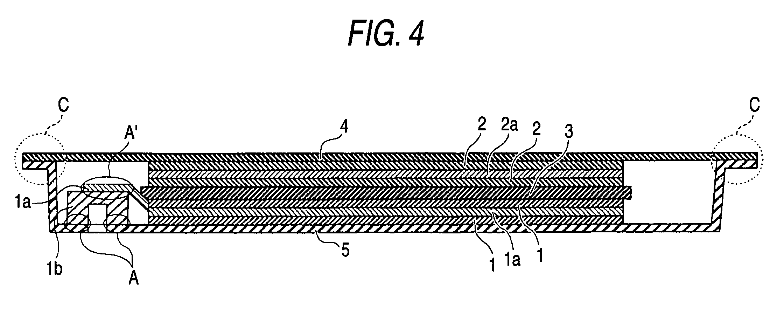

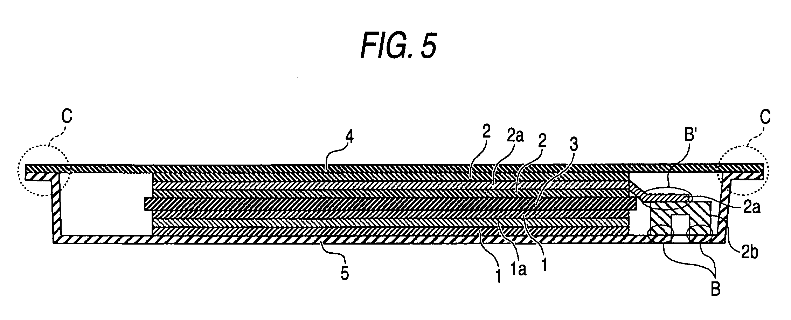

Hereinafter, an example according to an aspect of the present invention will be described in detail with reference to the accompanying drawings. Figs. 1 to 5 show an example of a film-type storage device according to the invention, in which two laminate films, a surface film 4 and a surface film 5 are overlapped and thermally bonded at their end. Fig. 1 is a bottom surface view seen through the surface film 5 (each layer can be distinguished by the direction of hatching). Fig. 2 is a cross-sectional view taken along the ling I - I'. Fig. 3 is a cross-sectional view taken along the ling II - II'. Fig. 4 is a cross-sectional view taken along the line III - III'. Fig. 5 is a cross-sectional view taken along the line IV - IV'.

In the storage device shown in Figs. 1 to 5, connecting terminals of positive and negative electrodes are exposed to the outside from the surface of each of surface films 4 and 5. Each of positive and negative terminals 1b and 2b has a blind bore, the inner surface of which is exposed to the outside, and can be connected with the outside.

The connecting terminal, that is, the positive and negative terminals 1b and 2b will be described more specifically. The positive and negative terminals 1b and 2b are thermally bonded at A and B of the surface film 5 respectively (Figs. 3 to 5). Holes are formed on A and B of the surface film 5 sequentially for screw portions for lead wire fixing 1c and 2c to be exposed to the outside. In the examples shown in Figs. 1 to 5, the surface film 5 is emboss-shaped as thick as the thickness of the positive electrode 1, the negative electrode 2 and a separator 3, however, either or both of the surface films 4 and 5 may be emboss-shaped. In addition, the surface films 4 and 5 are thermally bonded at C so as to be sealed.

As shown the examples of Figs. 1 to 5, the positive electrodes 1 formed at both surfaces of a positive electrode collector 1a and the negative electrodes 2 formed at both surfaces of a negative electrode collector 2a are layered with the separator interposed therebetween. The separator 3 is made of a porous body and the like having no electron conductivity and communicating holes, which can endure an electrolytic solution, electrode active material or the like, generally, fabric, non-woven fabric or porous body made of glass fiber, polyethylene, polypropylene or the like is used as the separator 3. Although it is preferable that the thickness of the separator 3 is small in order to decrease the internal resistance of a capacitor, it is possible to set an appropriate thickness in consideration of the possessing amount, fluidity, strength and the like.

In addition, the separator 3 is impregnated with an electrolytic solution, in which a compound capable of generating ions, which can be included in the positive and negative electrodes, is dissolved in a non-proton organic solvent. Generally, the electrolytic solution is impregnated into the separator 3 as a gas state, however, when the separator 3 is not used, the gel or solid-state electrolyte can be used.

The positive and negative electrode collectors 1a and 2a have holes (not shown), which penetrate the front and rear surfaces thereof, the positive and negative terminals 1b and 2b of a cell are connected with the holes respectively at A' and B'.

Since the storage device according to an aspect of the invention is constructed as above, the connecting terminals do not project from a gap of overlapped surface films. Therefore, the airtightness of a sealed portion of the surface films can be maintained high, and the durability of the surface films is also high. In addition, since the connecting terminals do not project outward, the size of whole storage device can be compact. In addition, since it is possible to shorten the distance from the positive and negative electrodes to the connecting terminals, the increase in resistance, which is induced by the extending of the above distance, can be suppressed.

Hereinafter, additional examples will be described focusing on the features of the examples, and the same structure will not be described again.

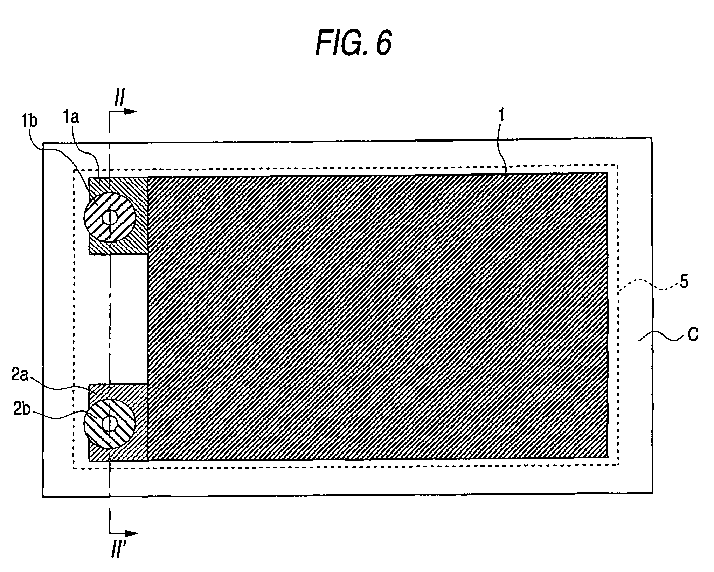

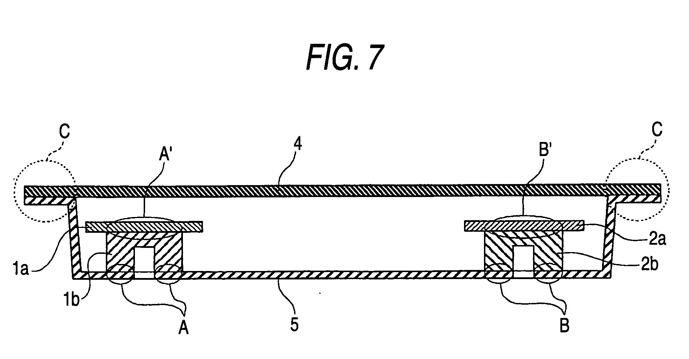

Figs. 6 and 7 show an example, in which outside terminals of the positive and negative electrodes are exposed to the outside on the film surface. When the sizes of the surface films 4 and 5 is equal to those of Fig. 1, as shown in Fig. 6 and the like, it is preferable that the positive terminal 1b and the negative terminal 2b be provided at the same side, since the sizes of the electrodes can be increased, and thus the capacity can be increased.

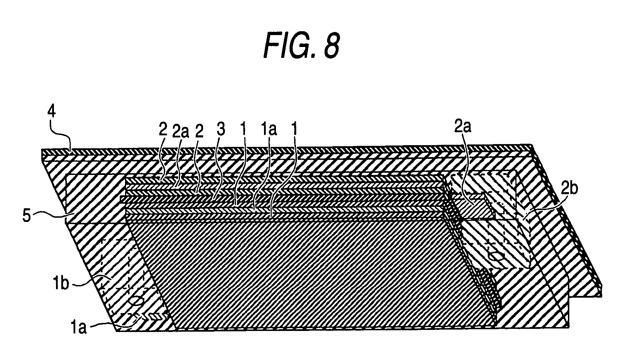

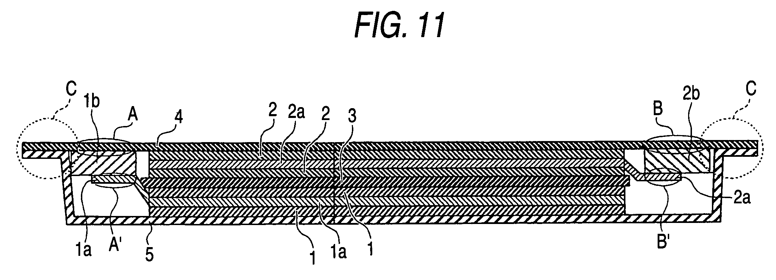

Figs. 8 to 11 show an example, in which connecting terminals having penetrating holes respectively are provided. The positive and negative electrodes 1b and 2b shown in Figs. 8 to 11 are thermally bonded with the surface films 4 and 5 at A and B, and, for example, supersonic-welded to the positive and negative electrode collectors 1a and 2a at A' and B' respectively. In addition, the example includes holes, which penetrate from the front surface to the rear surface. Other than the effects obtained by the examples shown in Figs. 1 to 5, if a plurality of cells are assembled to form a storage device, the structure of the storage device can be compact.

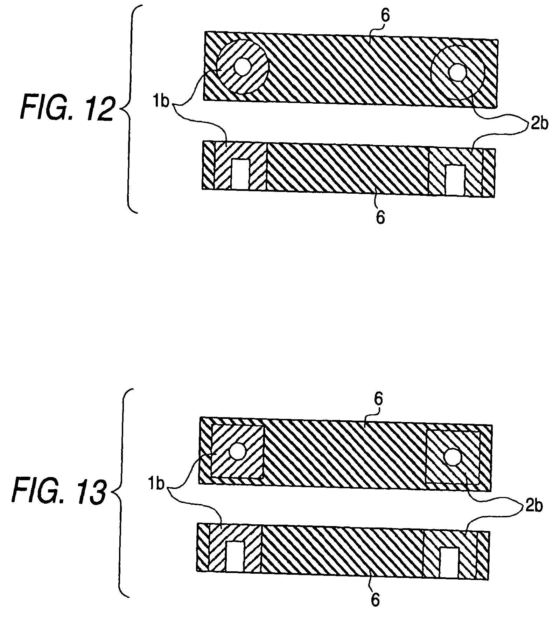

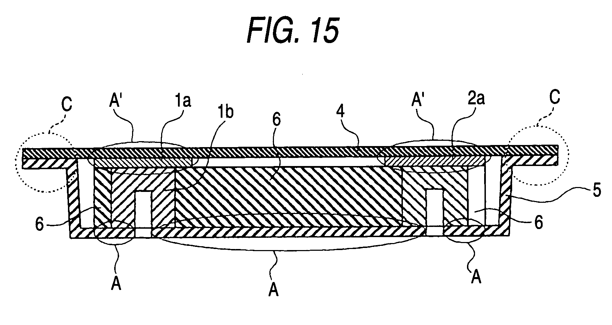

In addition, Figs. 12 to 15 show the other example of the positive and negative terminals 1b and 2b, in which the positive and negative terminals 1b and 2b are not thermally bonded to the surface film separately, but the positive and negative terminals 1b and 2b are fixed to a terminal supporting body 6, and the whole is thermally bonded to the surface film. In this case, it is desirable that the positive and negative terminals 1b and 2b are fixed to the terminal supporting body 6 with no space therebetween. Since the positive and negative terminals 1b and 2b are thermally bonded to the surface film with the supporting body as a whole, the strength of the thermally-bonded portion of the surface film increases when lead wires are screwed to the terminals.

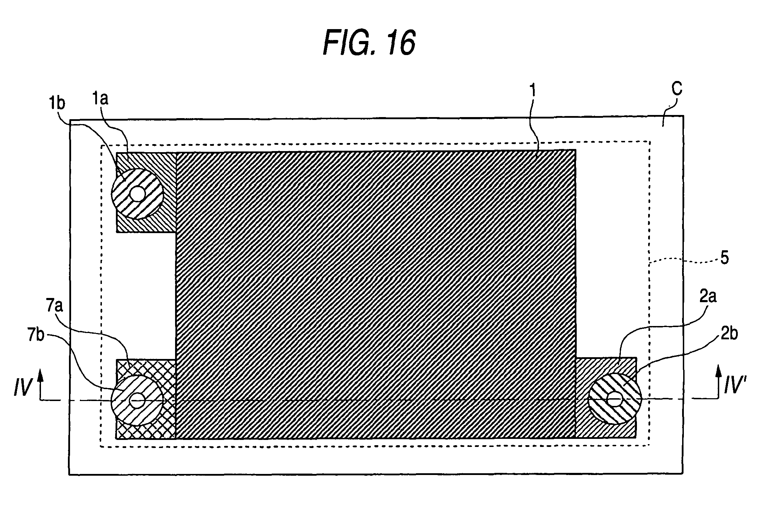

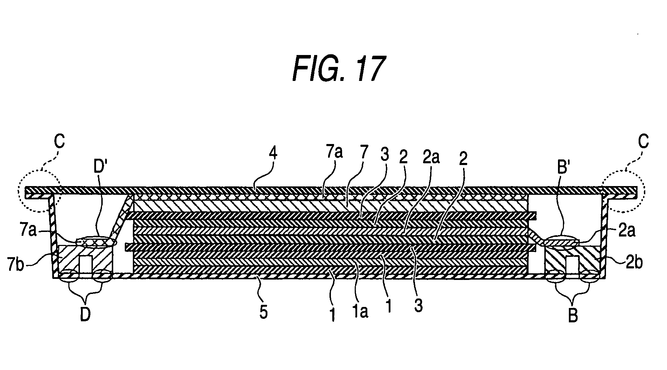

Figs. 16 and 17 show an example, in which a lithium electrode 7, a lithium electrode collector 7a and a lithium terminal 7b are provided. Fig. 17 is a cross-sectional view taken along the line IV - IV' in Fig. 16. As shown in Fig. 17, the lithium electrode 7 is accumulated on the separator 3, which is accumulated on the negative electrode collector 2a, and the lithium electrode collector 7a is accumulated on the lithium electrode 7. The lithium electrode collector 7a is, for example, supersonic-welded to the lithium terminal 7b at D'. The lithium terminal 7b is fixed to the surface film 5 at D by thermal bonding. The lithium terminal 7b has a blind bore, and the inner surface of the blind bore is exposed to the outside. Since the example is provided with the lithium terminal, which can be connected with the outside, it is easy to compulsively dope lithium from the lithium electrode to the negative electrode by supplying electric charges to the lithium electrode.

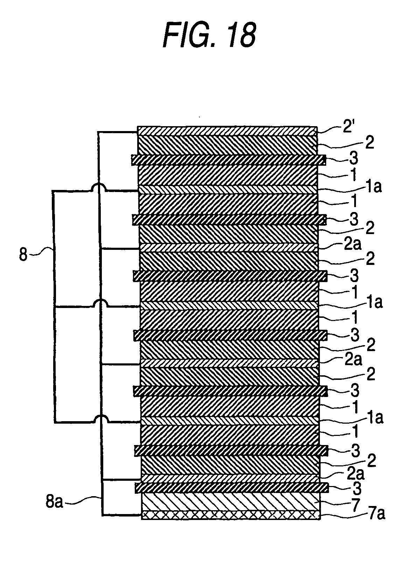

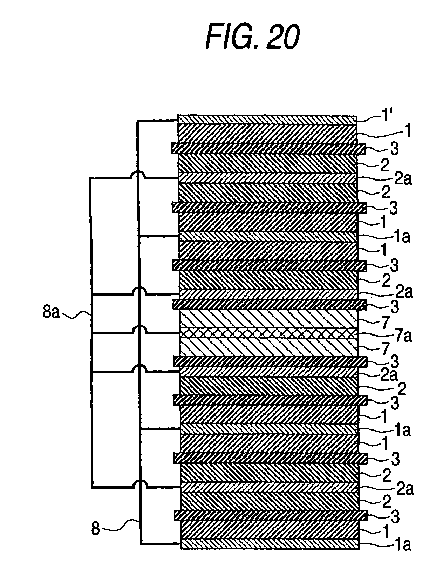

Figs. 18 to 20 show an example of an organic electrolyte capacitor having the lithium electrode, in which lithium is disposed in the cell, and plural sets of positive electrode plate, separator, and negative electrode plate are layered sequentially.

Fig. 18 shows an example of the electrode arrangement in the cell of the above-type capacitor. As shown in Fig. 18, the negative electrodes 2 formed on both surfaces of the negative electrode collectors 2a are connected with the lithium metal 7, which is press-bonded to a lithium metal collector 7a such as stainless mesh, copper expanded metal and the like with a conductive wire 8a, and the lithium metal 7 is disposed at the lower part of the layered unit.

The negative electrode collector 2a can be directly welded to the lithium metal collector 7a. In addition, the positive electrodes 1 formed at both surfaces of the positive electrode collector 1a are layered on the negative electrodes 2 with a separator 3 interposed therebetween.

The positive and negative electrode collectors 2a and 1a have holes (not shown), which penetrate the front and rear surfaces thereof, respectively, and the holes are connected with the positive and negative terminals of the cell respectively.

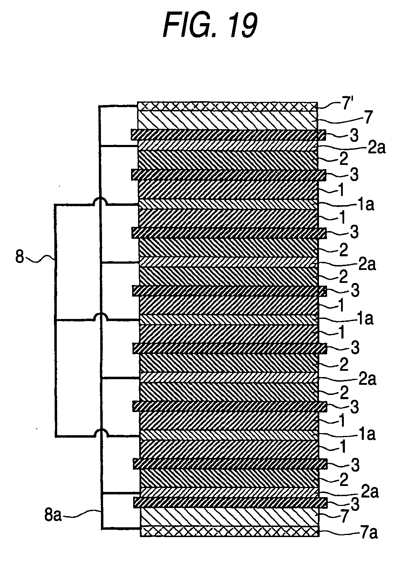

Fig. 19 shows another example of the electrode arrangement in the cell of the above capacitor. In the capacitor, the lithium metals 7, which are press-bonded to the lithium metal collectors 7a are disposed at the upper and lower parts of the layered unit respectively.

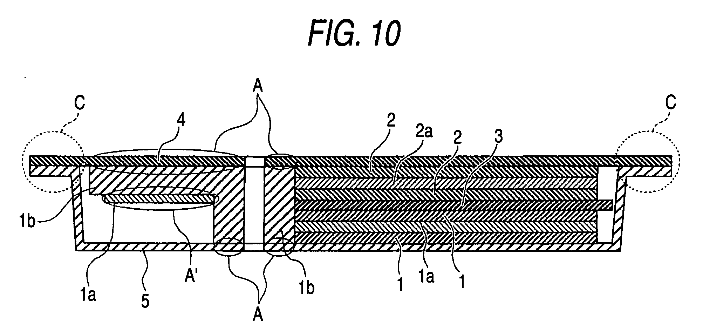

In addition, in the other example shown in Fig. 10, the lithium metal 7 is disposed in the middle of the layered unit. As shown in Figs. 19 to 20, the position of the lithium metal 7 can be properly changed in the layer-type electrode arrangement as shown in the above examples.

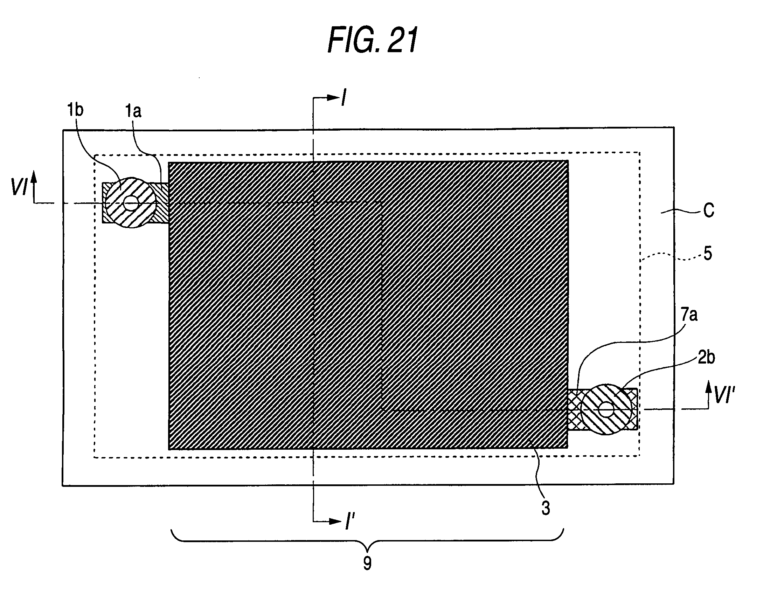

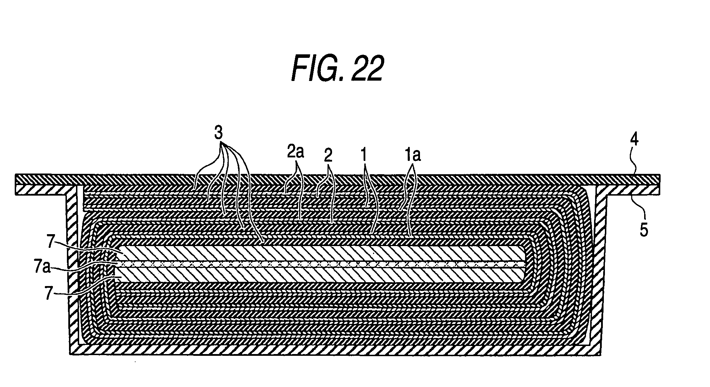

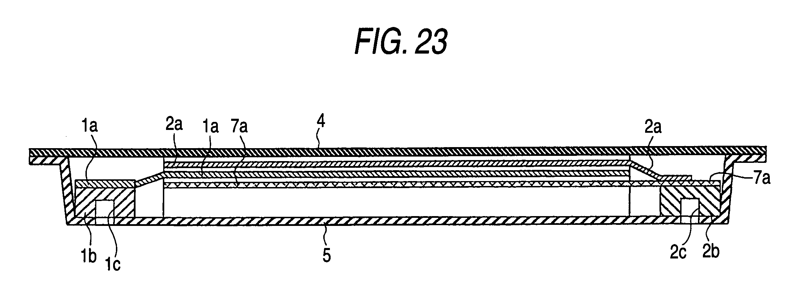

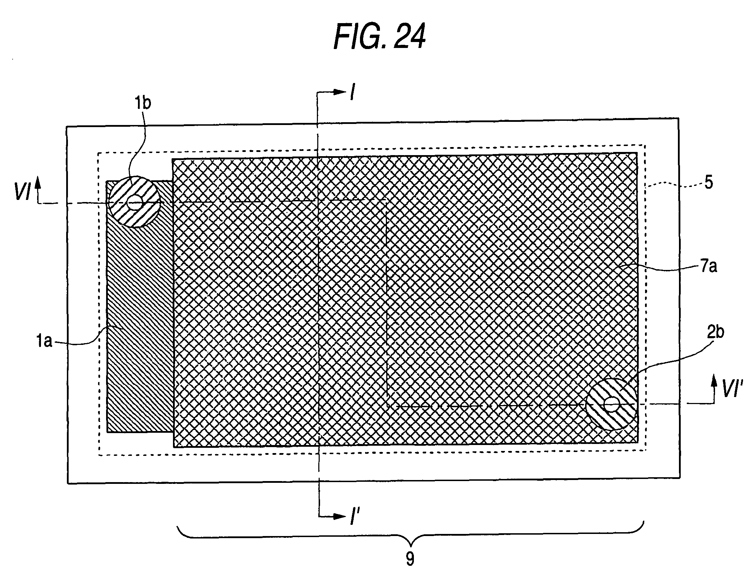

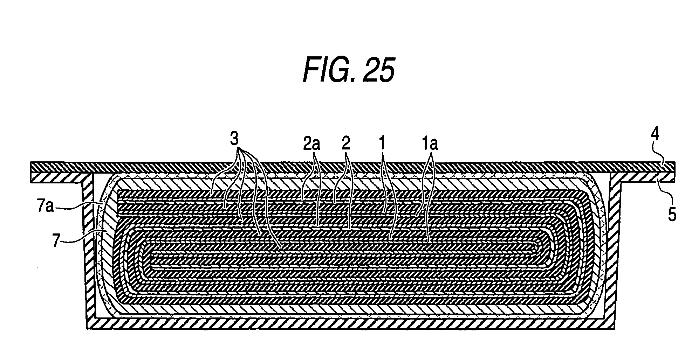

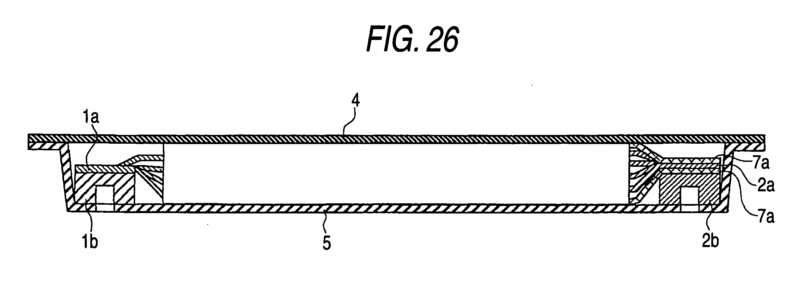

Figs. 21 to 23 and Figs. 24 to 26 show an example of the electrode arrangement of capacitors having winding structures, which are used in rectangular batteries and the like, as an example of the invention. Fig. 22 is a cross-sectional view taken along the line IV - IV' in Fig. 21, and Fig. 23 is a cross-sectional view taken along the line I - I' in Fig. 21. In addition, Fig. 25 is a cross-sectional view taken along the line I - I' in Fig. 24, and Fig. 26 is a cross-sectional view of the line IV - IV' in Fig. 24.

Electrode winding units, which are used in two examples shown in Figs. 21 to 26, are manufactured by winding the sheet-shaped positive and negative electrodes with the separators interposed therebetween oval, and then by pressing the above. In the above electrode arrangements, the positive and negative electrodes 1 and 2 are formed on the collectors.

Figs. 21 to 23 show an example, in which plate-shaped lithium metals 7 are provided in the middle of the electrode winding unit in forming the electrode winding unit 9 having a winding-type structure, which can be obtained by layering the sheet-shaped positive and negative electrodes and the respective collectors, and then by winding the above. Meanwhile, a layered portion formed by winding the sheets fitted one another is called a layered portion of the electrode winding unit. The lithium collector 7a is interposed between two pieces of lithium metal 7 (see Fig. 22). As shown in Figs. 21 to 23, the negative electrode collector 2a projects to the negative terminal at the outermost circumferential portion of each sheet from the layered portion of the electrode winding unit 9 so as to form an extracted portion for connecting with the negative terminal (Fig. 23 depicts only the collectors in the layered portion of the electrode winding unit 9, and does not depict the positive and negative electrode and the like in order to show the introduction).

The lithium electrode collector 7a also has an extracted portion for connecting with the negative electrode, which projects from the layered portion. In addition, the positive electrode 1a has an extracted portion projecting to the positive terminal from the layered portion of the electrode winding unit 9, and the extracted portion projects to the upper surface of the positive terminal, and then is connected with the positive terminal.

In the example shown in Figs. 24 to 26, the lithium metal 7 is adhered to the outer circumference of the separator 3, which becomes the outermost circumference of the winding body (Fig. 25). As shown in Fig. 26, each sheet-shaped lithium collectors 7a and negative electrode collectors 2a deviates from the other layered members to project to the negative terminal so as to form the extracted portion, which projects from the layered portion of the electrode winding unit, and the lithium collectors 7a and the negative electrode collectors 2a are connected with the upper surface of the negative terminal respectively. In addition, the positive electrode collectors 1a have extracted portions projecting to the positive terminal from the layered portion of the electrode winding unit, and the extracted portions project to the upper surface of the positive terminal, and are connected with the positive terminal. Meanwhile, Fig. 26 does not depict the layers in the layered portion of the electrode winding unit.

In the examples shown in Figs. 21 to 26, the negative electrode is touched to the lithium via a conductive substance such as nickel, copper, stainless and the like, or by sticking the lithium to the negative electrode collector. However, the structure of the organic electrolyte capacitor according to an aspect of the invention is not limited thereto, for example, the lithium may be stuck directly to the negative electrode. That is, every structure, in which all negative electrodes are in electrochemical contact with the lithium, and the lithium is carried by a negative active material via an electrolytic solution when the electrolytic solution is injected, is permitted for assembled cells.

If a conductive porous body such as stainless mesh and the like is used for the lithium metal collector, and over 80% of the lithium metal fills pores of the conductive porous body, the number of voids, which are induced by the loss of lithium between the electrodes, decreases even when the lithium is carried, whereby the lithium can be smoothly carried in the negative active material.

On the other hand, it is possible to dispose the lithium in the sectional direction of the negative electrode plate, to make the negative electrode electrochemically contact with the lithium metal in the cell, and thus to carry the lithium in the negative active material. However, in this case, if the width of the electrode is long, the doping fluctuation increases in the electrode. Therefore, it is desirable to consider the structure of the cell, the size of the electrode and the like in selecting the location of the lithium.

In the organic electrolyte capacitor having the lithium electrode which is an example of the invention, since the lithium, which is carried in the negative electrode, is disposed partially at specific locations, the freedom of cell design and the productivity of the capacitor can be improved, and the capacitor can have a superior charging and discharging characteristic.

In the organic electrolyte capacitor, the amount of lithium, which is carried in the negative electrode, can be determined in each case according to characteristics required for a negative electrode material and the organic electrolyte capacitor.

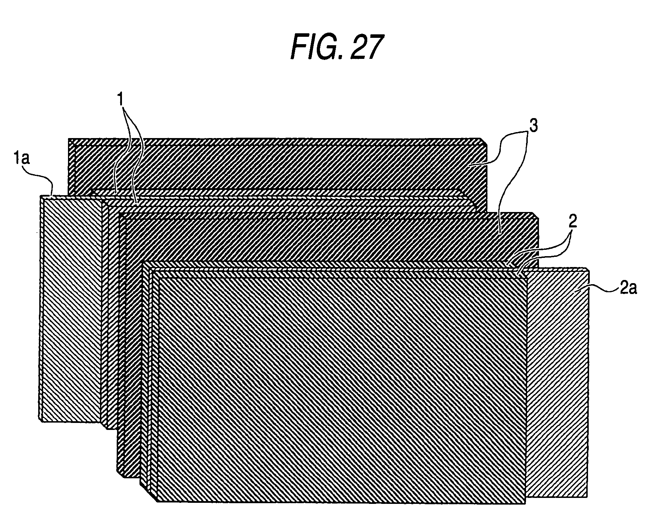

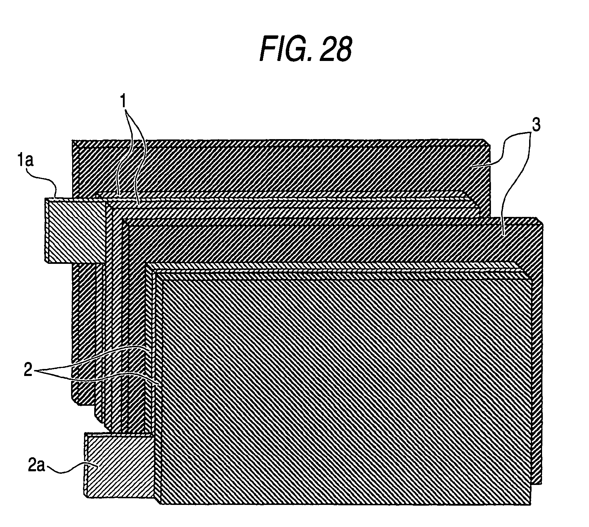

Figs. 27 and 28 is a spread perspective view showing the shape and layering direction of terminal welding portions of a layering electrode collector. In an example of Fig. 27, the positive and negative terminals are layered in the opposite directions each other, and, in an example of Fig. 28, the positive and negative terminals are layered in the same direction. However, the layering direction of the positive and negative terminals is not limited to the above two directions.

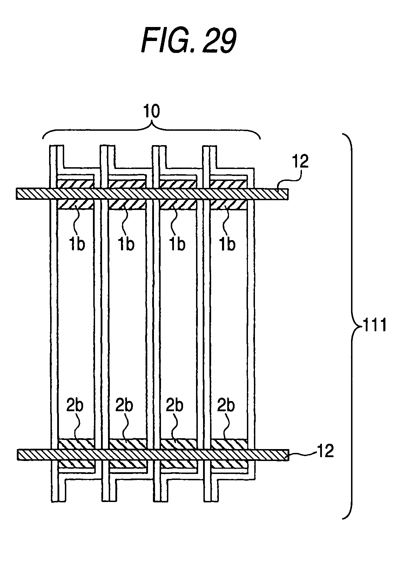

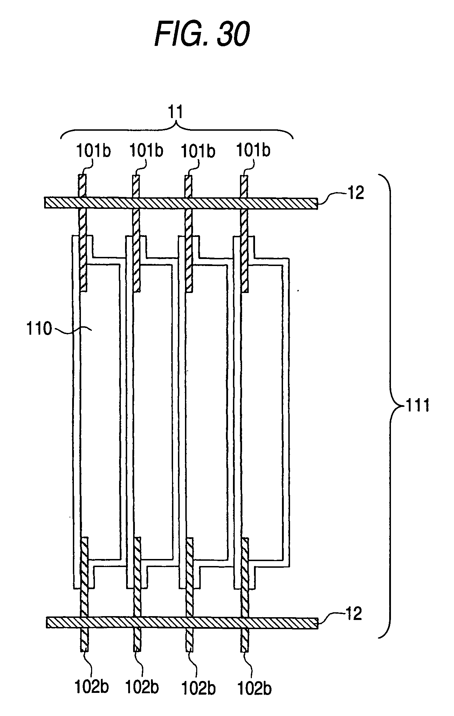

Figs. 29 and 30 show assembled batteries, in which layered units 10 having four layered cell are coupled by conductive rods 12. It is evident from Figs. 29 and 30 that the assembled battery (Fig. 29) using the terminals of an aspect of the invention is compact comparing with the assembled battery 111 of Fig. 30, in which a layered unit 11 having four layered conventionally structured film-type cells is coupled by a conductive rod 12 in the same manner as the above.

### (Example)

First to third examples, first to second comparative examples

### (Manufacturing method of the negative electrode)

PAS is synthesized by performing thermal treatment on a 0.5 mm-thick phenolic resin plate in a siliconit electric furnace, which increases the temperature up to 500°C at a speed of 50°C/hour, and then up to 650°C at a speed of 10°C/hour under nitrogen atmosphere. The PAS plate is milled by a disc mill to obtain PAS powder. The H/C ratio of the PAS powder is 0.22.

Next, slurry is obtained by sufficiently mixing the PAS powder of 100 parts by weight with a solution, in which polyvinylidene fluoride powder of 10 parts by weight is dissolved in N-methyl pyrrolidone of 120 parts by weight. The slurry is coated and dried on both surface of a 40 µm-thick (porosity 50%) copper expanded metal. The metal is pressed to be a 200 µm-thick PAS negative electrode.

### (Manufacturing method of the positive electrode)

PAS is synthesized by performing thermal treatment on a 0.5 mm-thick phenolic resin plate in a siliconit electric furnace, which increases the temperature up to 500°C at a speed of 50°C/hour, and then up to 650°C at a speed of 10°C/hour under nitrogen atmosphere. PAS powder is obtained by milling the PAS, which is activated by water vapor, with a nylon ball mill. The specific surface area of the powder by the BET method is 1500 m²/g, and the H/C thereof is 0.10, which can be calculated by the elementary analysis.

Slurry is obtained by sufficiently mixing 100 parts by weight of the PAS powder with a solution, in which 10 parts by weight of polyvinylidene fluoride powder is dissolved in 100 parts by weight of N-methyl pyrrolidone. The slurry is coated and dried on both surface of a 40 µm-thick (porosity 50%) aluminum expanded metal, which is coated with carbonic conductive dyes. The metal is pressed to be a 380 µm-thick PAS positive electrode.

### (Measurement of the capacitance per unit weight of the negative electrode)

The above negative electrode is cut into four 1.5 × 2.0 cm²-size pieces to obtain samples for negative electrode evaluation. Sample cells are assembled by using a 1.5 × 2.0 cm²-size, 200 µm-thick metal lithium as the opposite electrode to the negative electrode and a 50 µm-thick polyethylene non-woven fabric as the separator. Metal lithium is used as a reference electrode. A solution of 1 mol/l-LiPF₆ dissolved in propylene carbonate is used as electrolytic solution.

The weight of the negative active material is charged with 400 mAh/g of lithium at a charging current of 1 mA, and then discharges at 1 mA until the voltage becomes 1.5 V. The capacitance per unit weight of the negative electrode is 653 F/g, which is extracted from the discharging time, that is, the time required for the electric potential to change as much as 0.2 V from that of the negative electrode at one minute later from the beginning of the discharging.

### (Measurement of the capacitance per unit weight of the positive electrode)

The positive electrode is cut into three 1.5 × 2.0 cm²-large pieces, and each forms positive electrode, negative electrode, and reference electrode. A sample cell of the capacitor is manufactured by assembling the positive and negative electrodes with a 50 µm-thick paper non-woven fabric separator interposed therebetween. A solution of 1 mol/l triethylmethylammonium · tetrafluoroborate (TEMA·BF₄) dissolved in propylenecarbonate is used as the positive electrolytic solution.

The sample cell is charged at a charging current of 10 mA until the electric potential becomes 2.5 V, and then charged at a constant voltage. After one hour from the beginning of the charging, the sample cell discharges at 1 mA until the electric potential becomes 0 V. The capacitance per unit weight of the cell is 21 F/g, which is extracted from the discharging time during 2.0 to 1.5 V in the electrical potential. In addition, the capacitance per unit weight of the positive electrode, which is extracted in the same manner as above from the potential difference between the reference and positive electrodes, is 85 F/g.

### (Preparation of electrode layer unit 1)

The 200 µm-thick PAS negative electrode and the 380 µm-thick PAS positive electrode are cut into the shape of Fig. 27 having a size of 5.0 × 7.0 cm². After that, as shown in Fig. 27, the welding portion of the connecting terminal of the positive electrode collector (hereinafter referred to as 'connecting terminal welding portion') is disposed opposite to the connecting terminal welding portion by using a 25 µm-thick cellulose/rayon mixed non-woven fabric as the separator, and then facing surfaces of the positive and negative electrodes are layered up to ten layers. The separators are disposed at the uppermost and lowest portions, and then the four sides of the separators are sealed with tapes. Then, an electrode layer unit is obtained. Meanwhile, the layer unit includes five positive electrodes and six negative electrodes, and, as shown in Fig. 19, one side of each of negative electrodes formed at both sides of the layered electrodes is removed to form two outermost negative electrodes. The thickness of the electrode layer unit is 120 µm, and the weight of the positive active material is 1.7 times larger than that of the negative active material. Two pieces of lithium metal, which is made of lithium metal foil (80 µm, 5.0 × 7.0 cm²) press-bonded to an 80 µm-thick stainless net, are disposed at the top and bottom of the electrode layer unit to face the negative electrode. The stainless nets, to which the negative electrode (two pieces of one surface, four pieces of both surfaces) and lithium are press-bonded, are welded and bonded to each other so as to form the electrode layer unit 1.

### (Preparation of electrode layer unit 2)

The 200 µm-thick PAS negative electrode and the 380 µm-thick PAS positive electrode are cut into the shape of Fig. 28 having an electrode area of 5.0 × 8.0 cm². The electrode layer unit is obtained in the same manner as the electrode layer unit 1 except that the connecting terminal welding portions of the positive and negative electrode collectors are disposed at the same side. The weight of the positive active material is 1.7 times larger than that of the negative active material. Two pieces of lithium metal, which is made of lithium metal foil (80 µm, 5.0 × 8.0 cm²) press-bonded to an 80 µm-thick stainless net, are disposed at the top and bottom of the electrode layer unit 2 to face the negative electrode. The stainless nets, to which the negative electrode (two pieces of one surface, four pieces of both surfaces) and lithium are press-bonded, are welded and bonded to each other so as to form the electrode layer unit 2.

### (Preparation of electrode layer unit 3)

The 200 µm-thick PAS negative electrode and the 380 µm-thick PAS positive electrode are cut into the shape of Fig. 28 having an electrode area of 5.0 × 7.0 cm². The electrode layer unit is obtained in the same manner as the electrode layer unit 1 except that the connecting terminal welding portions of the positive electrode collector is disposed opposite to that of the negative electrode collector as shown in Fig. 10 and so on. The weight of the positive active material is 1.7 times larger than that of the negative active material. Two pieces of lithium metal, which is made of lithium metal foil (80 µm, 5.0 × 7.0 cm²) press-bonded to an 80 µm-thick stainless net, are disposed at the top and bottom of the electrode layer unit 2 to face the negative electrode. The stainless nets, to which the negative electrode (two pieces of one surface, four pieces of both surfaces) and lithium are press-bonded, are welded and bonded to each other so as to form the electrode layer unit 3.

### (Preparation of cell 1)

3 mm-diameter holes are formed on the surface film, which is drawn as deep as 3.5 mm, and an aluminum-made positive terminal and a copper-made negative terminal are thermally bonded to the holes respectively as shown in Fig. 1. Both positive and negative terminals are 10 mm in diameter, and 3 mm in thickness. The above electrode layer unit 1 is provided in the deeply drawn surface film, the terminal welding portions (five pieces) of the positive electrode collector are supersonic-welded to the positive terminal, and those (six pieces) of the negative electrode collector are supersonic-welded to the negative terminal. It is vacuum-impregnated with a solution composed of 1 mol/l LiPF₆ dissolved in a solution, in which ethylenecarbonate, diethylcarbonate and propylenecarbonate are mixed in the weight ratio of 3:4:1, as an electrolytic solution, and then covered with the surface laminate film. After that, four sides of the surface laminate film are thermally bonded to assemble 50 cells of the film-type capacitors.

### (Preparation of cell 2)

Holes, which have shapes of Fig. 6 and 3 mm-diameters, are formed on the surface film, which is drawn as deep as 3.5 mm, and a unit, in which an aluminum-made positive terminal and a copper-made negative terminal are fixed to a polypropylene-made terminal supporting body, is thermally bonded to the holes with the connecting terminals and the coupling structure shown in Fig. 12 in the same manner as the cell 1. The above electrode layer unit 2 is provided in the deeply drawn surface film, the terminal welding portions (five pieces) of the positive electrode collector are supersonic-welded to the positive terminal, and those (six pieces) of the negative electrode collector are supersonic-welded to the negative terminal. It is vacuum-impregnated with a solution composed of 1 mol/l LiPF₆ dissolved in a solution, in which ethylenecarbonate, diethylcarbonate and propylenecarbonate are mixed in the weight ratio of 3:4:1, as an electrolytic solution, and then covered with the surface laminate film. After that, four sides of the surface laminate film are thermally bonded to assemble 50 cells of the film-type capacitors.

### (Preparation of cell 3)

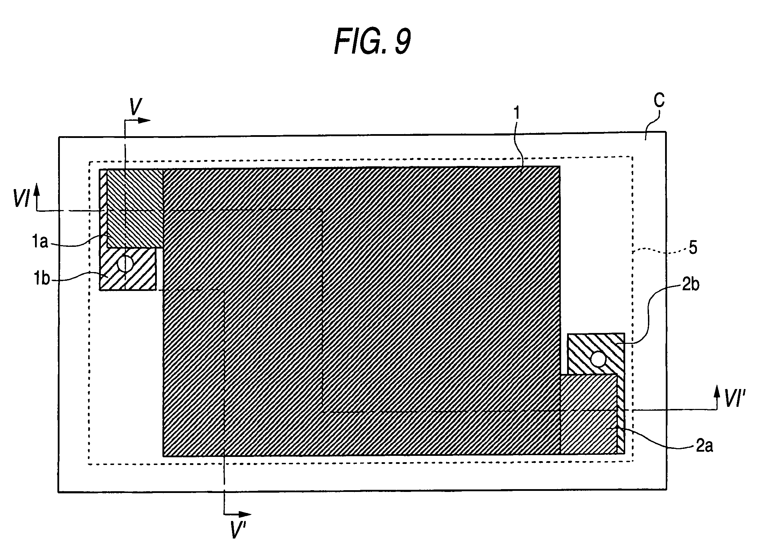

The connecting terminals are connected with the other members as shown in Fig. 10. The terminal welding portions (five pieces) of the positive electrode collector and the terminal welding portions (six pieces) of the negative electrode collector of the electrode layer unit 3 are supersonic-welded to A' portion of the aluminum-made positive terminal and B' portion of the copper-made negative terminal, and provided in the surface film, which has 3 mm-diameter holes formed at locations shown in Fig. 9, and is drawn as deep as 3.5 mm. The positive and negative terminals are thermally bonded with the surface films 4 and 5 at A' and A' portions and B and B' portions. It is vacuum-impregnated with a solution composed of 1 mol/l LiPF₆ dissolved in a solution, in which ethylenecarbonate, diethylcarbonate and propylenecarbonate are mixed in the weight ratio of 3:4:1, as an electrolytic solution, and then covered with the surface laminate film. After that, four sides of the surface laminate film are thermally bonded to assemble 50 cells of the film-type capacitors.

### (Preparation of cell 4)

10 mm-wide, 50 mm-long, and 0.1 mm-thick aluminum-made positive terminals and copper-made negative terminal are supersonic-welded to the terminal welding portions (five pieces) of the positive electrode collector and the terminal welding portions (six pieces) of the negative electrode collector of the electrode layer unit 1. It is provided in the surface film, which is drawn as deep as 3.5 mm, and vacuum-impregnated with a solution composed of 1 mol/l LiPF₆ dissolved in a solution, in which ethylenecarbonate, diethylcarbonate and propylenecarbonate are mixed in the weight ratio of 3:4:1, as an electrolytic solution, and then covered with the surface laminate film. After that, four sides of the surface laminate film are thermally bonded to assemble 50 cells of the film-type capacitors.

### (Preparation of cell 5)

50 cells of the film-type capacitors are assembled in the same manner as the cell 3 except that a 60 µm-thick sealant film (10 mm-wide) is wound on the 10 mm-wide, 50 mm-long, and 0.1 mm-thick aluminum-made positive terminal and copper-made negative terminal.

### (Initial evaluation of the cell)

The internal resistance, whether a circuit short is induced, and whether the electrolytic solution is leaked are checked seven days after when the assembly of cells 1 to 5. The electrolytic solution leakage is checked after 50 cycles of thermal shock test, in which the above cells are put under the temperatures of - 10°C and 60°C for one hour in turn. Table. 1 shows the result, and the internal resistances are average values of 50 cells.

**Table. 1**

| | Internal resistance (mΩ) | Number of sheet | Number of electrolytic solution leakage |
|---|---|---|---|
| First Example (cell 1) | 14.2 | 0 | 0 |
| Second Example (cell 2) | 12.8 | 0 | 0 |
| Third embodiment (cell 3) | 13.7 | 0 | 0 |
| First comparative example (cell 4) | 16.4 | 5 | 3 |
| Second comparative example (cell 5) | 16.5 | 3 | 2 |

For cells thermally bonded with the terminals interposed between two laminate films (comparative examples 1 and 2), it is turned out that the terminals are easily short-circuited with the aluminum foils in the central portion of the laminate film. In addition, some cells leak the electrolytic solution after 50 cycles of thermal shock test. Electrolytic solution leakage is induced mainly at etching portions of the terminals.

### (Characteristic evaluation of the cell)

Cells, in which short-circuit and electrolytic solution leakage are not induced after seven-day exposure to the room temperature, are disassembled. The lithium metal is used up completely in all cells 1 to 4. Therefore, it is proved that lithium is charged preliminarily to obtain capacitance per unit weight of 650 F/g for the negative active material. The capacitance per unit weight ratio of the negative active material to the positive active material is 7.65.

In addition, ten cells from each of cells 1 to 4 are charged at a constant current of 1000 mA until the cell voltages reach 3.3 V, and then charged with a constant current - constant voltage charging, which supplies a constant voltage of 3.3 V, for one hour. After that, the cells discharge at a constant current of 100 mA until cell voltages reach 1.6 V. The capacity and energy density of the cell are evaluated after repeating the above 3.3 to 1.6 V cycle three times. Table. 2 shows the result, and the capacity and energy density of the cell are average values of the cells.

**Table. 2**

| | Cell capacity (mAh) | Energy density (Wh/l) |
|---|---|---|
| First Example (cell 1) | 91 | 15 |
| Second Example (cell 2) | 102 | 16 |
| Third Example (cell 3) | 93 | 15 |
| First comparative example (cell 4) | 89 | 15 |
| Second comparative example (cell 5) | 90 | 15 |

It is evident that the capacitance per unit weight of the negative active material is over three times larger than that of the positive active material, the weight of the positive active material is larger than that of the negative active material, and an organic electrolyte capacitor, which is designed to carry lithium previously at the negative electrode, has a large energy density.

In addition, the packing ratio of the active material varies with the installing method of the terminals, whereby the capacity and energy density vary even when the film battery has the same appearance size. It is desirable that the terminals be disposed at the same side as shown in cell 2, since the above arrangement can make the cell have higher capacity.

### (Comparison of the energy density of four cells arranged in parallel in consideration of the terminals)

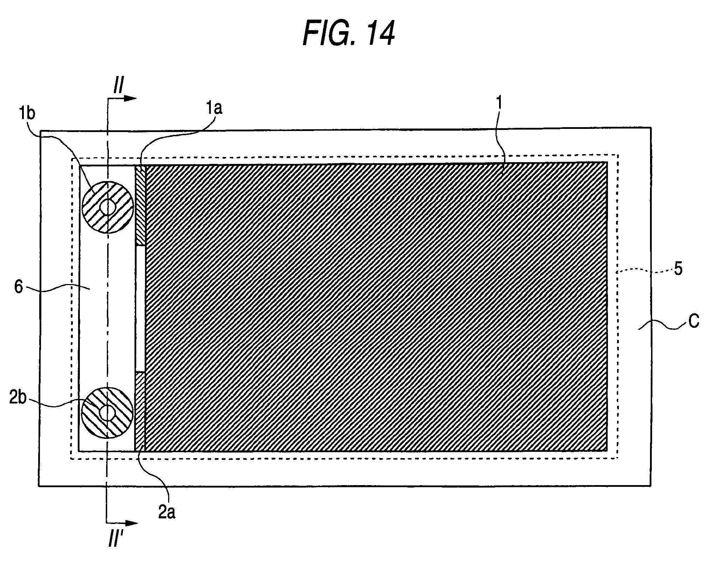

Cells 4 and 5 are assembled cells, in which four cells are layered. Although the cell of the third embodiment (cell 3) can be a compact assembled cell as shown in Fig. 14, since the cell of the second embodiment (cell 5) is assembled by tying the terminals projecting to the outside of the cell, the volume is 10% larger than that of the assembled cell of the third embodiment. Therefore, it is evident that the energy density of the third embodiment is 10% higher than that of the second embodiment.

### Forth Example

Six cells are assembled in the same manner as the first embodiment except that lithium is not carried in the negative electrode. The six cells are charged at a constant current of 1000 mA until the cell voltages reach 3.3 V. After that, the constant current - constant voltage charging, which supplies a constant voltage of 3.3 V, is performed for one hour. Next, the cells discharge at a constant current of 100 mA until the cell voltages reach 1.6 V. The cell capacity is 30 mAh (average value of six cells) after repeating the above 3.3 to 1.6 V cycle three times. The energy density of the capacitor is 4.5 Wh/l, that is, below 10 Wh/l. When the negative electrode does not carry sufficient lithium, satisfactory capacity cannot be obtained.

### Fifth Example

Six cells are assembled in the same manner as the first embodiment except that 20 µm-thick aluminum foils are used for the positive electrode collector, and 20 µm-thick copper foils are used for the negative electrode. When a cell is disassembled after twenty-day exposure to the room temperature, lithium metal almost remains.

The six cells are charged at a constant current of 1000 mA until the cell voltages reach 3.3 V. After that, the constant current - constant voltage charging, which supplies a constant voltage of 3.3 V, is performed for one hour. Next, the cells discharge at a constant current of 100 mA until the cell voltages reach 1.6 V. The cell capacity is 32 mAh (average value of three cells) after repeating the above 3.3 to 1.6 V cycle three times. The energy density of the capacitor is 4.8 Wh/l, that is, below 10 Wh/l. When the negative electrode does not carry sufficient lithium, satisfactory capacitance cannot be obtained.

When metal foils are used for the collectors, and lithium is disposed opposite to the negative electrode, lithium cannot be carried in the negative electrode, and sufficient capacity cannot be obtained.

### Sixth Example

### (Preparation of electrode layer unit 4)

The 200 µm-thick PAS negative electrode and the 380 µm-thick PAS positive electrode are cut into the shape of Fig. 27 having a size of 5.0 × 7.0 cm². After that, as shown in Fig. 27, the connecting terminal welding portion of the positive electrode collector is disposed opposite to the connecting terminal welding portion by using a 25 µm-thick cellulose/rayon mixed non-woven fabric as the separator, and then facing surfaces of the positive and negative electrodes are layered up to ten layers. Meanwhile, lithium metal foils (32 µm, 5.0 × 7.0 cm²) are laminated (total four pieces) on a surface of the negative electrode as the lithium metal. Half-cut lithium metal foils (32 µm, 5.0 × 7.0 cm²) are laminated (total two pieces) on the negative electrodes, which are parted on a surface of each of two outermost negative electrodes as shown in Fig. 18. The separators are disposed at the uppermost and lowest portions, and four sides of the surface films are sealed with tapes to obtain the electrode layer unit 4. The weight of the positive active material is 1.7 times larger than that of the negative active material.

### (Preparation of cell 6)

Seven cells are assembled in the same manner as cell 1 except that the electrode layer unit 4 is used.

### (Characteristic evaluation of the cells)

No lithium metal remains when a cell is disassembled after seven-day exposure to the room temperature. The weight ratios and capacitance ratios of the positive and negative active materials are equal to those of the first embodiment. The above remaining six cells are charged at a constant current of 1000 mA until the cell voltages reach 3.3 V. After that, the constant current - constant voltage charging, which supplies a constant voltage of 3.3 V, is performed for one hour. Next, the cells discharge at a constant current of 100 mA until the cell voltages reach 1.6 V. The cell capacities are 90 mAh (average value of six cells), and the energy density is 13 Wh/l after repeating the above 3.3 to 1.6 V cycle three times.

The organic electrolyte capacitor shown in the sixth embodiment has high energy density. However, the organic electrolyte capacitor includes 32 µm-thick lithium foils throughout the surface of the negative electrode, and the lithium foils can be produced as thin as 32 µm. Therefore, the carrying method of lithium shown in the first to the third embodiments can increase the freedom of the cell design, and is a satisfactory industrial method.

### Industrial Applicability

According to the invention, a film-type storage device, which is low in the frequency of electrolytic solution leakage and the internal resistance, is provided. In addition, according to the invention, a storage device, which can be designed compact, is provided. Also, according to the invention, a storage device, which can considerably lower the loss of energy density by terminals, and has high energy density, is provided. In addition, according to the invention, a film-type storage device, which is suitable for an assembled battery, is provided.

In addition, according to the invention, a storage device having a superior charging and discharging characteristic is provided. In addition, according to the invention, a storage device, which can charge and discharge for a long time, and is superior in safety, is provided. In addition, according to the invention, a storage device, which has low probability of short-circuit and is easy to manufacture, is provided. Also, an electric device using the above storage devices is provided.

## Claims

1. A film-type storage device comprising:
a storage body, which has at least one pair of positive and negative electrodes, and is sealed with a surface film, at least a part of which is sealed; and
connecting terminals for connecting the positive and negative electrodes to the outside, a part of each of which is exposed;
wherein exposed portions of the connecting terminals are located at non-sealed portions.

2. The film-type storage device according to claim 1,
wherein the exposed portions of the connecting terminals are formed in the terminals.

3. The film-type storage device according to claim 2,
wherein the internal exposed portions of the connecting terminals are blind bores.

4. The film-type storage device according to claim 2,
wherein the internal exposed portions of the connecting terminals are penetrating holes.

5. The film-type storage device according to claim 1,
wherein the connecting terminals of the positive and negative electrodes are fixed to a same terminal supporting body, and the terminal supporting body is integrally fixed to an inner surface of the surface film.

6. The film-type storage device according to claim 1,
wherein a positive active material can reversibly carry lithium ions and/or anions, a negative active material can reversibly carry lithium ions, capacitance per unit weight of the negative active material is over three times larger than that of the positive active material, and weight of the positive active material is larger than that of the negative active material.

7. The film-type storage device according to claim 6,
wherein the storage body has positive and negative electrode collectors, the collectors have holes penetrating front and rear surfaces of the collectors respectively, a lithium electrode, which is disposed opposite to the negative electrode, is capable of electrochemically supplying lithium ion to the negative electrode, and the lithium electrode, which make the negative electrode carry lithium ion previously before charging, is provided at the storage body.

8. The film-type storage device according to claim 6,
the negative active material is an insoluble and infusible base having a polyacene-based skeletal structure, hydrogen/carbon atomic ratio is in the range of 0.50 to 0.05.

9. An electric device including the storage device according to claim 1.
